# FASCICULE DE BREVET EUROPEEN

(11) **EP 2 303 528 B1**
(45) Date de publication et mention de la délivrance du brevet: **04.01.2012**
(21) Numéro de dépôt: 09769534.0
(22) Date de dépôt: 24.06.2009
(51) Int. Cl.: B26F 1/00, B26B 17/00

(54) **PINCE A COMMANDE MANUELLE**
HANDBETÄTIGTE ZANGE
HAND-OPERATED PLIERS

(30) Priorité: 27.06.2008 FR 0854305
(43) Date de publication de la demande: 06.04.2011
(73) Titulaire: Amouroux, Christophe, 11200 Roubia (FR); Dorcy, Géraud, 90100 St Dizier l'Evèque (FR); Vermersch, Carole, 13003 Marseille (FR); Lammens, Henri, 11620 Villemoustaussou (FR); Dorcy, Yves, 90100 St Dizier l'Evèque (FR); Lefebvre, Yannick, 11100 Narbonne (FR); Vanneyre, Alain, 13300 Salon de Provence (FR)
(72) Inventeur: AMOUROUX, Christophe, 11200 Roubia (FR)
(74) Mandataire: Rhein, Alain
(86) Numéro de dépôt international: PCT/FR2009/051206
(87) Numéro de publication internationale: WO 2009/156693

(56) Documents cités:
- US-A- 5 893 201
- US-B1- 6 430 767

## Description

La présente invention a trait à une pince à commande manuelle pour percer un tuyau d'irrigation et pour équiper un tel tuyau d'irrigation avec un goutteur

Cette invention concerne le domaine de l'outillage utilisé dans le cadre de l'aménagement des espaces verts et trouvera une application toute particulière lorsqu'il s'agit d'installer un système d'irrigation des plantations constituant un tel espace vert.

Lorsqu'il s'agit d'assurer une telle irrigation, il est connu de recourir à un système particulièrement efficace consistant à assurer la distribution de l'eau goutte à goutte. Un tel système d'irrigation est, au moins en partie, constitué par un tuyau d'irrigation équipé d'une pluralité de goutteurs.

Selon un premier mode de réalisation, de tels goutteurs peuvent être mis en place au niveau du tuyau d'irrigation conformément à un procédé automatique, notamment décrit dans le document FR-2.587.925, et mis en oeuvre lors de la fabrication en usine d'un tel système d'irrigation.

Un tel mode de réalisation présente l'avantage d'assurer le positionnement des goutteurs de manière régulière le long du tuyau d'irrigation. Cependant, cette régularité n'est aucunement adaptée à la réalité du terrain et à l'emplacement des plantations qu'il convient d'irriguer.

Aussi et selon un second mode de réalisation, il est connu, tout d'abord, d'implanter un tuyau d'irrigation parmi les plantations à irriguer et, ensuite seulement, de mettre en place individuellement chaque goutteur à l'endroit exact où il est nécessaire d'assurer une distribution d'eau.

Un tel mode de réalisation est particulièrement fastidieux et nécessite, dans un premier temps, un perçage du tuyau et, dans un second temps, une mise en place du goutteur.

A ce propos, on observera que, pour assurer le perçage du tuyau, il est connu de faire appel à un outil se présentant sous la forme d'une pince manuelle comportant, d'une part, une première mâchoire pourvue d'un berceau pour la réception du tuyau et, d'autre part, une seconde mâchoire pourvue d'un poinçon déplaçable en direction du berceau sous l'effet d'une manipulation de la pince. Cette pince comporte, encore, un système de réglage de la position du poinçon.

Outre le fait que cette pince permette uniquement le perçage du tuyau, le système de réglage est particulièrement exposé de sorte qu'au cours de l'utilisation de la pince, il se produit une accumulation de terre, de végétaux et autres composés indésirables entravant le déplacement du poinçon, voire provoquant son blocage.

De plus et étant donné que cette pince permette uniquement de percer le tuyau, l'opérateur en charge de la réalisation du système d'irrigation se doit d'assurer la mise en place, individuellement, de chaque goutteurs au niveau de ce tuyau. Une telle mise en place est assurée de manière manuelle en introduisant, en force, un téton pourvu de cannelures à l'intérieur du perçage précédemment effectué.

Une telle mise en place est particulièrement fastidieuse, fatigante et pénible sans compter qu'elle est susceptible d'occasionner des blessures, notamment aux mains, de l'opérateur. Ce phénomène est, bien entendu, amplifié lors de la saison hivernale pendant laquelle le tuyau, usuellement réalisé en un matériau plastique, présente une dureté accrue.

Le document US-6,430,767 décrit une pince selon le préambule de la revendication 1. La présente invention se veut à même de remédier aux inconvénients des dispositifs de l'état de la technique.

A cet effet, l'invention concerne une pince à commande manuelle pour percer un tuyau d'irrigation et pour équiper un tel tuyau d'irrigation avec un goutteur, telle que définie dans la revendication 1.

Une autre caractéristique consiste en ce que le moyen pour mettre en place le goutteur comporte un moyen, équipant une première mâchoire, et conçu pour maintenir ce goutteur avant sa mise en place sur le tuyau percé.

Ce moyen de maintien comporte au moins une lame ressort, de préférence de type escamotable voire amovible, prenant appui contre le goutteur, de préférence latéralement.

En fait, un tel moyen de maintien comporte, plus particulièrement, deux lames formant une pince et entre lesquelles est pincé ledit goutteur.

Une caractéristique additionnelle consiste en ce que le moyen pour mettre en place le goutteur comporte un moyen, défini au niveau d'une première mâchoire, et conçu pour recevoir un tel goutteur. Ce moyen de réception est, au moins en partie, constitué par une ouverture, notamment sous forme d'une échancrure définie au niveau de l'extrémité libre de la première mâchoire, et à l'intérieur de laquelle vient se positionner une partie du goutteur.

Une autre caractéristique concerne le fait que la pince comporte un moyen, équipant la deuxième mâchoire, et conçu pour recevoir un tuyau d'irrigation dans une première position de perçage de ce tuyau ainsi que dans une seconde position de mise en place d'un goutteur sur ce tuyau percé.

En fait, un tel moyen de réception peut être, d'une part, constitué par un berceau pour la réception du tuyau et, d'autre part, mobile par rapport à la première mâchoire, ceci entre une première position de perçage de ce tuyau et une seconde position de mise en place du goutteur sur le tuyau percé.

De plus, cette pince comporte un moyen de rappel du moyen de réception de la première position de perçage du tuyau dans la seconde position de mise en place d'un goutteur sur ce tuyau.

Finalement, une caractéristique additionnelle de cette pince consiste en ce qu'elle comporte un moyen pour adapter la forme et/ou la dimension du moyen de réception d'un tuyau à celle de ce tuyau.

Les avantages de la présente invention consistent en ce que la pince permet d'assurer le perçage d'un tuyau ainsi que la mise en place d'un goutteur au niveau de ce tuyau, ceci à l'aide d'un seul et unique outil à main.

De plus, la pince conforme à l'invention permet de percer et d'équiper un tuyau avec un goutteur, ceci de façon simple et, plus particulièrement, selon deux manipulations rapides et successives.

L'utilisation de cette pince permet, également, d'équiper un tuyau avec une pluralité de goutteurs de manière rapide et précise, ceci en minimisant la fatigue et les risques de traumatisme pour l'opérateur.

Un autre avantage de la pince consiste en ce qu'elle est de conception simple et robuste ce qui permet une utilisation et un entretien aisés ainsi qu'une longévité accrue par rapport aux pinces de l'état de la technique.

Encore un autre avantage consiste en ce que la pince comporte une pluralité de moyens de réglages permettant d'adapter l'utilisation de cette pince à la nature, à la forme et/ou à la dimension du tuyau et/ou du goutteur. Ceci autorise, notamment, une adaptation de la pince à des tuyaux d'irrigation de différents diamètres.

De tels moyens de réglage permettent, encore, d'adapter l'utilisation de cette pince aux conditions climatiques et/ou saisonnières de son utilisation.

Finalement, un mode de réalisation particulièrement avantageux de cette pince consiste en ce qu'elle comporte un moyen de réception d'un tuyau de type mobile par rapport au moyen de perçage et au moyen de mise en place du goutteur. Ce moyen de réception est complété par un moyen assurant son rappel d'une position de perçage vers une position de mise en place de goutteur ce qui permet, avantageusement et de manière automatique, le passage du tuyau d'une position de perçage vers une position de mise en place du goutteur.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée et générale de la pince objet de la présente invention et conforme à un mode préféré de réalisation ;
- la figure 2 est une vue schématisée et en détail des mâchoires de la pince illustrée figure 1, ceci dans une première position du moyen de réception correspondant à une position de perçage d'un tuyau ;
- la figure 3 est une vue schématisée et en détail des mâchoires de la pince illustrée figure 1, ceci dans une seconde position du moyen de réception correspondant à une position de mise en place d'un goutteur sur le tuyau.

La présente invention concerne le domaine de l'outillage utilisé dans le cadre de l'aménagement des espaces verts.

Cet outillage trouvera une application toute particulière lorsqu'il s'agit d'installer un système d'irrigation des plantations constituant un tel espace vert.

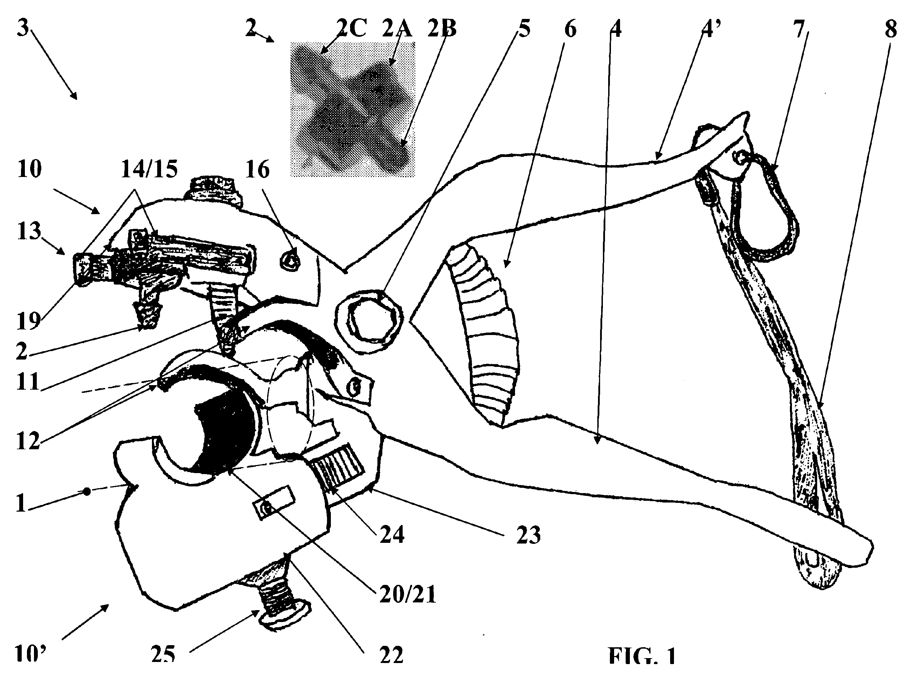

Un tel système d'irrigation comporte, d'une part, au moins un tuyau d'irrigation 1 (représenté en traits pointillés figure 1) et, d'autre part, une pluralité de goutteurs 2 équipant un tel tuyau d'irrigation 1.

De manière connue en soi, un tel goutteur 2 comporte, d'une part, un corps 2A adoptant la forme d'un disque épais, d'autre part et au niveau de l'un des côtés de ce corps 2A, un tube 2B destiné à être engagé dans un perçage que comporte un tuyau d'irrigation 1 et, d'autre part encore et au niveau de l'autre côté de ce corps 2A, une buse 2C pour la distribution d'eau.

La présente invention concerne, alors, un outillage constitué par une pince 3 à commande manuelle conçue pour équiper un tel tuyau d'irrigation 1 avec un tel goutteur 2.

Tel que visible sur les figures en annexe, une telle pince 3 comporte une paire de bras 4, 4' articulés l'un 4 par rapport à l'autre 4' (plus particulièrement l'un 4 sur l'autre 4') autour d'un axe 5 et destinés à être manipulés par un opérateur pour l'actionnement de la pince 3. Ces bras 4, 4' peuvent, encore, être complétés, d'une part, par un ressort 6 conçu pour assurer une ouverture de ces bras 4, 4', ceci à l'encontre d'une manipulation de l'opérateur, et, d'autre part, par un moyen 7 pour immobiliser ces bras 4, 4' en position de fermeture, correspondant notamment à une position de remisage de la pince 3, voire encore par une dragonne 8 ou analogue.

Une telle pince 3 comporte, encore, deux mâchoires 10, 10' se situant, chacune, dans le prolongement de l'un de ces bras 4, 4' et conçues pour être rapprochées sous l'effet d'une manipulation de la pince 3 par l'opérateur.

Selon une autre caractéristique de la présente invention, la pince 3 comporte un moyen 11 pour percer le tuyau, ceci sous l'effet du rapprochement de ces deux mâchoires 10, 10'.

Tel que visible sur les figures en annexe, un tel moyen de perçage 11 est constitué par un poinçon équipant une première mâchoire 10.

De manière avantageuse, un tel poinçon est de type réglable, voire amovible, ceci en vue d'adapter la profondeur du perçage aux caractéristiques du tuyau 1 à percer. A ce propos, on observera qu'un mode préféré de réalisation consiste en ce qu'un tel poinçon est conçu pour être vissé/dévissé en vue d'une telle adaptation.

Une caractéristique additionnelle de l'invention consiste en ce qu'un tel moyen de perçage 11 peut être complété par un moyen 12 pour caler le tuyau 1 à percer, ceci dans une position de perçage.

Tel que visible sur les figures en annexe, un tel moyen 12 de calage peut, au moins en partie, être constitué par au moins un crochet fixe équipant la deuxième mâchoire 10', voire (et de préférence) par deux crochets fixes s'étendant de part et d'autre de cette deuxième mâchoire 10'.

A ce propos, il convient d'observer qu'un tel moyen de calage 12 est, plus particulièrement, adapté pour caler des tuyaux d'irrigation 1 dont le diamètre est important alors que pour des tuyaux 1 d'irrigation de faible diamètre le calage de ces derniers est assuré par un moyen 20 pour la réception d'un tel tuyau 1 tel qu'il sera décrit ci-dessous et qui constitue, alors et en lui-même, un tel moyen de calage.

Selon l'invention, cette pince 3 comporte, encore, un moyen 13 pour mettre en place un goutteur 2 sur le tuyau 1 percé, ceci sous l'effet du rapprochement des deux mâchoires 10, 10'.

En fait et de manière avantageuse, la mise en place d'un tel goutteur 2 est assurée au niveau d'un perçage préalablement réalisé à l'aide du moyen de perçage 11 que comporte cette même pince 3.

Selon une autre caractéristique, un tel moyen 13 de mise en place d'un goutteur 2 est, au moins en partie, défini au niveau de la première mâchoire 10 de la pince 3, plus particulièrement à proximité de l'extrémité libre de cette première mâchoire 10.

Un mode de réalisation préféré consiste en ce que le moyen 11 pour percer le tuyau 1 et le moyen 13 pour mettre en place le goutteur 2 sont juxtaposés au niveau de la première mâchoire 10 de cette pince 3 comme visible sur les figures en annexe.

En fait, le moyen 13 pour mettre en place le goutteur 2 comporte un moyen 14, équipant la première mâchoire 10, et conçu pour maintenir ce goutteur 2 avant sa mise en place sur le tuyau 11 percé.

A ce propos, on observera qu'un tel moyen 14 de maintien comporte au moins une lame ressort 15, s'étendant à l'avant de la première mâchoire 10 et prenant appui contre le goutteur 2, de préférence latéralement.

Cependant et selon un mode préféré de réalisation, un tel moyen 14 de maintien est, en fait, constitué par deux lames ressort 15 de ce type, formant une pince, et entre lesquelles est pincé ledit goutteur 2.

Une telle lame ressort 15 est, de préférence, de type escamotable voire amovible (notamment en vue de son remplacement), ceci en sorte de pouvoir être adaptée à des goutteurs 2 de taille et/ou de forme différentes.

Une caractéristique additionnelle consiste, alors, en ce qu'un tel moyen 14 de maintien est complété par un moyen 16 conçu pour immobiliser, de manière réversible, au moins une lame ressort 15 par rapport à la première mâchoire 10.

Un tel moyen 16 d'immobilisation est, de préférence, constitué par une vis de serrage ou analogue.

Selon une autre caractéristique, le moyen 13 pour mettre en place le goutteur 2 comporte un moyen 17, défini au niveau d'une première mâchoire 10 (plus particulièrement à l'extrémité libre de cette mâchoire 10), et conçu pour recevoir un tel goutteur 2.

Un premier mode de réalisation (non représenté) consiste en ce qu'un tel moyen 17 de réception peut être constitué par le moyen 14 de maintien susmentionné.

Cependant et selon un mode de réalisation préféré de l'invention illustré sur les figures en annexe, un tel moyen de réception 17 est, au moins en partie, constitué par une ouverture 18 définie au niveau de la première mâchoire 10 (notamment sous forme d'une échancrure définie au niveau de l'extrémité libre de cette première mâchoire 10) et à l'intérieur de laquelle vient se positionner une partie du goutteur 2 (plus particulièrement une buse d'écoulement 2C que comporte un tel goutteur 2).

Ce moyen de réception 17 peut, encore, être constitué par au moins une surface d'appui 19 contre laquelle vient prendre appui ce goutteur 2 (notamment le corps 2A de ce goutteur 2).

Un tel moyen de réception 17 vient, alors, compléter un moyen de maintien 14 (tel que décrit ci-dessus) qui est, alors également, conçu pour maintenir le goutteur 2 en position au niveau de ce moyen de réception 17, ceci avant la mise en place de ce goutteur 2 sur le tuyau percé 1.

Une autre caractéristique de la présente invention consiste en ce que la pince 3 comporte un moyen 20, équipant la deuxième mâchoire 10', et conçu pour recevoir un tuyau d'irrigation 1 dans une première position de perçage de ce tuyau 1 ainsi que dans une seconde position de mise en place d'un goutteur 2 sur ce tuyau 1 percé.

Selon un premier mode de réalisation non représenté, un tel moyen de réception 20 est constitué, d'une part, par un premier berceau 21 pour la réception du tuyau d'irrigation 1 dans une première position de perçage de ce tuyau 1, ce premier berceau 21 se situant en regard du moyen 11 de perçage de ce tuyau 1.

D'autre part, ce moyen de réception 20 est constitué par un second berceau pour la réception de ce tuyau 1 dans la seconde position de mise en place du goutteur 2, ce second berceau se situant en regard du moyen 13 de mise en place de ce goutteur 2 sur ce tuyau 1.

Ainsi, le protocole d'utilisation d'une pince 3 conforme à ce premier mode de réalisation consiste :
- à ouvrir les mâchoires 10, 10' et à positionner le tuyau 1 à percer dans le premier berceau 21 et dans une première position de perçage ;
- à assurer le perçage de ce tuyau 1 en assurant le rapprochement des deux mâchoires 10, 10', ceci en manipulant les bras 4, 4' de la pince 3 ;
- à ouvrir les mâchoires 10, 10' et à déplacer le tuyau 1 percé pour l'amener dans le second berceau et dans une seconde position de mise en place du goutteur 2 ;
- à assurer la mise en place du goutteur 2 en assurant le rapprochement des deux mâchoires 10, 10', ceci en manipulant les bras 4, 4' de la pince 3 ;
- à ouvrir les mâchoires 10, 10' pour permettre l'extraction du tuyau 1 percé et équipé du goutteur 2.

Il a été illustré figures 1 à 3 un mode préféré de réalisation de l'invention dans lequel la pince 3 comporte un moyen 20 de réception d'un tuyau 1 constitué par un berceau 21 pour la réception de ce tuyau 1.

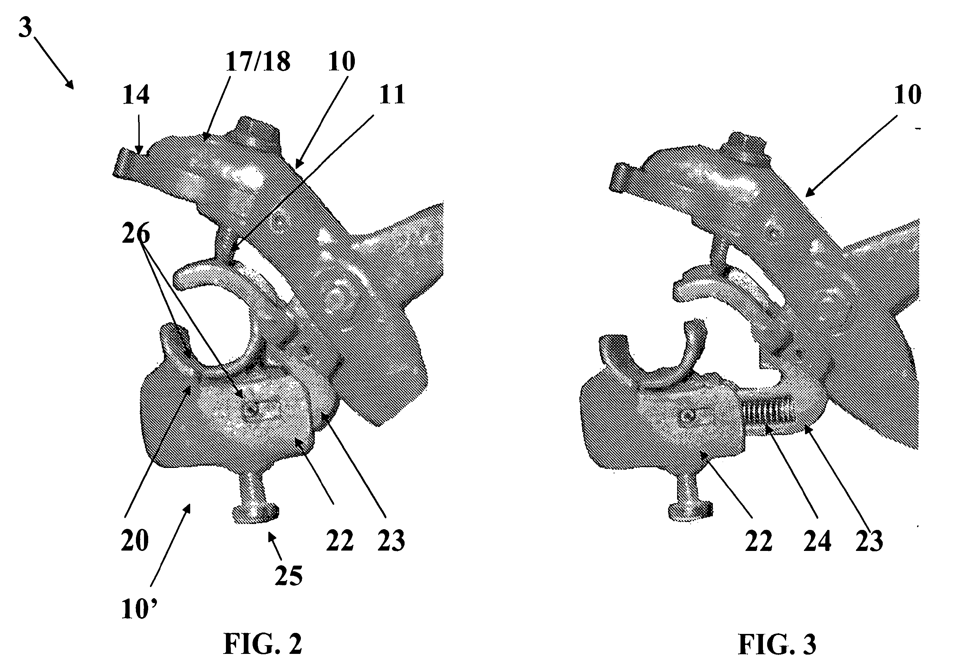

Selon une autre caractéristique, ce moyen de réception 20 est mobile par rapport à la première mâchoire 10, ceci entre une première position de perçage de ce tuyau 1 (figure 2) et une seconde position de mise en place du goutteur 2 sur le tuyau 1 percé (figure 3).

A ce propos, on observera que, pour assurer une telle mobilité du moyen de réception 20, la deuxième mâchoire 10' de la pince 3 comporte, d'une part, un chariot mobile 22 recevant ce moyen de réception 20 et, d'autre part, un support 23 sur lequel est monté en déplacement, plus particulièrement en coulissement, ledit chariot 22.

C'est, plus particulièrement, la mobilité de ce chariot 22 qui permet, avantageusement, au moyen de réception 20, associé à ce chariot 22, d'adopter les première et seconde position susmentionnées.

Une caractéristique additionnelle consiste en ce que la pince 3 comporte, encore, un moyen 24 de rappel du moyen 20 de réception de la première position de perçage du tuyau 1 dans la seconde position de mise en place d'un goutteur 2 sur ce tuyau 1.

En fait, ce moyen de rappel 24 (plus particulièrement sous la forme d'un ressort) est interposé entre le support 23 et le chariot 22 de manière à repousser ce dernier de ladite première position de perçage du tuyau 1 dans ladite seconde position de mise en place du goutteur 2.

Ainsi, le protocole d'utilisation d'une pince 3 conforme à ce second mode de réalisation consiste :
- à ouvrir les mâchoires 10, 10' et à positionner le tuyau 1 à percer dans le berceau 21 du moyen de réception 20 ;
- à amener le moyen de réception 20 (plus particulièrement le chariot 22) dans la première position de perçage du tuyau 1, ceci avant ou (et de préférence) après avoir positionné le tuyau 1 dans le berceau du moyen de réception 20 ;
- à maintenir le moyen de réception 20 et le tuyau 1 dans la position de perçage ;
- à assurer le perçage de ce tuyau 1 en assurant le rapprochement des deux mâchoires 10, 10', ceci en manipulant les bras 4, 4' de la pince 3 ;
- à ouvrir les mâchoires 10, 10' et à amener (plus particulièrement à laisser amener sous l'effet du moyen de rappel 24) le moyen de réception 20 dans la seconde position de mise en place du goutteur 2 ;
- à assurer la mise en place du goutteur 2 en assurant le rapprochement des deux mâchoires 10, 10', ceci en manipulant les bras 4, 4' de la pince 3 ;
- à ouvrir les mâchoires 10, 10' pour permettre l'extraction du tuyau 1 percé et équipé du goutteur 2.

Tel qu'évoqué ci-dessus, une étape de ce protocole consiste à amener et à maintenir le moyen de réception 20 (en fait, le chariot 22) dans la première position de perçage du tuyau 1. Une telle amenée et un tel maintien peuvent, avantageusement, être assurés en faisant prendre appui la chariot 22 contre une surface d'appui, notamment définie au niveau du sol ou du genou de l'opérateur.

Tel qu'évoqué ci-dessus, le perçage du tuyau 1 nécessite un maintien du moyen de réception 20 dans la première position de perçage. Un tel maintien peut être assuré de manière manuelle.

Cependant et selon un mode de réalisation préféré de l'invention, la pince 3 comporte un moyen 25 conçu pour assurer un tel maintien, ceci plus particulièrement à l'encontre du moyen 24 de rappel du moyen 20 de réception dans la seconde position de mise en place d'un goutteur 2.

Tel que visible sur les figures 1 à 3, un tel moyen 25 de maintien peut être constitué par un vis de serrage ou analogue, associée au chariot 22 et conçue pour coopérer avec le support 23 en vue d'un tel maintien.

Une caractéristique additionnelle consiste en ce que la pince comporte, encore, un moyen 26 pour adapter la forme et/ou la dimension du moyen 20 de réception d'un tuyau 1 à celle de ce tuyau 1.

A ce propos, on observera que, quel que soit le mode de réalisation de la pince 3, celle-ci comporte un moyen de réception 20 constitué par au moins un berceau 21, 21'.

Un tel berceau 21, 21' comporte, alors, deux parties dont l'une au moins est mobile par rapport à l'autre ce qui permet, avantageusement, d'adapter un tel berceau 21, 21' (et par conséquent, le moyen de réception 20) à la forme et/ou à la dimension du tuyau d'irrigation 1.

A ce propos, on observera que la présence de ce moyen 26 pour adapter la forme et/ou la dimension du moyen 20 de réception d'un tuyau 1 à celle de ce tuyau 1 permet, avantageusement, d'éviter l'écrasement du tuyau d'irrigation 1 lors du perçage et de la mise en place du goutteur 2.

Finalement et selon une autre caractéristique, un tel berceau 21, 21' est constitué par une gouttière et adopte une forme en « V », voire (et de préférence) une forme en « U ».

Là encore, la forme particulière de la gouttière de ce berceau 21, 21' permet, avantageusement, d'éviter l'écrasement du tuyau d'irrigation 1 lors du perçage et de la mise en place du goutteur 2.

## Revendications

1. Pince à commande manuelle (3) pour percer un tuyau d'irrigation (1) et pour équiper un tel tuyau d'irrigation (1) avec un goutteur (2), cette pince (3) comportant deux mâchoires (10, 10') ainsi qu'un moyen (11) pour percer le tuyau (1) sous l'effet du rapprochement de ces deux mâchoires (10, 10'), cette pince comportant encore un moyen (13) pour mettre en place un goutteur (2) sur le tuyau (1) percé **caractérisée par le fait qu'**elle comporte, le moyen (13) pour mettre en place un goutteur (2) sur le tuyau (1) percé, ceci sous l'effet du rapprochement des deux mâchoires (10, 10') et en vue d'équiper un tel tuyau (1) avec un tel goutteur (2).

2. Pince à commande manuelle (3) selon la revendication 1, **caractérisée par le fait que** le moyen (11) pour percer le tuyau (1) est défini par un poinçon ou analogue équipant une première mâchoire (10).

3. Pince à commande manuelle (3) selon l'une quelconque des revendications précédentes, **caractérisée par le fait que** le moyen (11) pour percer un tuyau (1) est complété par un moyen pour caler (12) ce tuyau (1) en position de perçage.

4. Pince à commande manuelle (3) selon l'une quelconque des revendications précédentes, **caractérisée par le fait que** le moyen (13) pour mettre en place le goutteur (2) comporte un moyen (14), équipant une première mâchoire (10), et conçu pour maintenir ce goutteur (2) avant sa mise en place sur le tuyau percé (1), un tel moyen de maintien (14) comportant au moins une lame ressort (15), plus particulièrement deux lames (15) formant une pince et entre lesquelles est pincé ledit goutteur (2), de préférence de type escamotable voire amovible, prenant appui contre le goutteur (2), de préférence latéralement.

5. Pince à commande manuelle (3) selon l'une quelconque des revendications précédentes, **caractérisée par le fait que** le moyen (13) pour mettre en place le goutteur (2) comporte un moyen (17), défini au niveau d'une première mâchoire (10), conçu pour recevoir un tel goutteur (2) et, au moins en partie, constitué par une ouverture (18), notamment sous forme d'une échancrure définie au niveau de l'extrémité libre de la première mâchoire (10), et à l'intérieur de laquelle vient se positionner une partie du goutteur (2).

6. Pince à commande manuelle (3) selon l'une quelconque des revendications précédentes, **caractérisée par le fait que** la pince (3) comporte un moyen (20), équipant la deuxième mâchoire (10'), et conçu pour recevoir un tuyau d'irrigation (1) dans une première position de perçage de ce tuyau (1) ainsi que dans une seconde position de mise en place d'un goutteur (2) sur ce tuyau (1) percé.

7. Pince à commande manuelle (3) selon la revendication 6, **caractérisée par le fait que** le moyen (20) de réception est, d'une part, constitué par un berceau (21) pour la réception du tuyau (1) et, d'autre part, mobile par rapport à la première mâchoire (10), ceci entre une première position de perçage de ce tuyau (1) et une seconde position de mise en place du goutteur (2) sur le tuyau (1) percé.

8. Pince à commande manuelle (3) selon la revendication 7, **caractérisée par le fait que** la pince (3) comporte un moyen de rappel (24) du moyen de réception (20) de la première position de perçage du tuyau (1) dans la seconde position de mise en place d'un goutteur (2) sur ce tuyau (1).

9. Pince à commande manuelle (3) selon l'une quelconque des revendications 6 à 8, **caractérisée par le fait que** la pince (3) comporte un moyen (26) pour adapter la forme et/ou la dimension du moyen de réception (20) d'un tuyau (1) à celle de ce tuyau (1).

10. Pince à commande manuelle (3) selon l'une quelconque des revendications 7 ou 8, **caractérisée par le fait que** le berceau (21) est constitué par une gouttière et adopte, de préférence, une forme en « U ».

## Claims

1. Hand-operated pincer (3) for piercing an irrigation pipe (1) and for equipping such an irrigation pipe (1) with a trickler (2), this pincer (3) including two jaws (10, 10') as well as means (11) for piercing the pipe (1) under the action of bringing together these two jaws (10, 10'), said pincer also including means (13) for installing a trickler (2) on the pierced pipe (1), wherein the pincer includes the means (13) for installing a trickler (2) on the pierced pipe (1) under the action of bringing together the two jaws (10, 10') and with a view to equipping such a pipe (1) with such a trickler (2).

2. Hand-operated pincer (3) according to claim 1, wherein the means (11) for piercing the pipe (1) is defined by a punch or the like equipping a first jaw (10).

3. Hand-operated pincer (3) according to any of the preceding claims, wherein the means (11) for piercing a pipe (1) is complemented by means for locking (12) said pipe (1) in piercing position.

4. Hand-operated pincer (3) according to any of the preceding claims, wherein the means (13) for installing the trickler (2) includes means (14) equipping a first jaw (10) and designed for supporting this trickler (2) before its installation on the pierced pipe (1), such a supporting means (14) including at least one spring blade (15), in particular two springs (15) forming a pincer and between which said trickler (2) is pinched, preferably of a withdrawable or even removable type, resting against the trickler (2), preferably laterally.

5. Hand-operated pincer (3) according to any of the preceding claims, wherein the means (13) for installing the trickler (2) includes means (17) defined at the level of a first jaw (10), designed for receiving such a trickler (2) and formed, at least partly, of an opening (18), in particular in the form of an indentation defined at the level of the free end of the first jaw (10), and inside which a portion of the trickler (2) is positioned.

6. Hand-operated pincer (3) according to any of the preceding claims, wherein the pincer (3) includes means (20) equipping the second jaw (10') and designed for receiving an irrigation pipe (1) in a first position of piercing of this pipe (1) as well as in a second position of installing of a trickler (2) on this pierced pipe (1).

7. Hand-operated pincer (3) according to claim 6, wherein the receiving means (20) is, on the one hand, formed of a cradle (21) for receiving the pipe (1) and, on the other hand, movable with respect to the first jaw (10), between a first position of piercing of this pipe (1) and a second position of installing of the trickler (2) on the pierced pipe (1).

8. Hand-operated pincer (3) according to claim 7, wherein the pincer (3) includes means for restoring (24) the receiving means (20) from the first piercing position of the pipe (1) into the second position of installing of a trickler (2) on this pipe (1).

9. Hand-operated pincer (3) according to any of claims 6 through 8, wherein the pincer (3) includes means (26) for adapting the shape and/or the dimension of the means for receiving (20) a pipe (1) to that of this pipe (1).

10. Hand-operated pincer (3) according to any of claims 7 or 8, wherein the cradle (21) is formed of a gutter and is, preferably, U-shaped.

## Patentansprüche

1. Handbetätigbare Loch- und Setzzange (3), um einen Bewässerungsschlauch (1) zu durchlochen, und um einen solchen Bewässerungsschlauch (1) mit einem Tropfer (2) zu versehen, wobei diese Zange (3) zwei Zangenbacken (10, 10') sowie ein Mittel (11), um den Schlauch (1) unter der Wirkung der Annäherung dieser beiden Zangenbacken (10 10') zu durchlochen, umfasst, wobei diese Zange außerdem ein Mittel umfasst, um einen Tropfer in den durchlochten Schlauch (1) zu setzen, **dadurch gekennzeichnet, dass** sie das Mittel (13) umfasst, um einen Tropfer (2) in den durchlochten Schlauch (1) zu setzen, und zwar unter der Wirkung der Annäherung der beiden Zangenbacken (10, 10'), und um einen solchen Schlauch (1) mit einem solchen Tropfer (2) zu versehen.

2. Handbetätigbare Zange (3) nach Anspruch 1, **dadurch gekennzeichnet, dass** das Mittel (11), um den Schlauch (1) zu durchlochen, durch einen Lochungsstempel oder dergleichen gebildet ist, der eine erste Zangenbacke (10) ausstattet.

3. Handbetätigbare Zange (3) nach irgendeinem der vorgehenden Ansprüche, **dadurch gekennzeichnet, dass** das Mittel (11), um einen Schlauch (1) zu durchlochen, mit einem Mittel (12) vervollständigt ist, um diesen Schlauch (1) in der Stanzposition stoßfest zu verspannen.

4. Handbetätigbare Zange (3) nach irgendeinem der vorgehenden Ansprüche, **dadurch gekennzeichnet, dass** das Mittel (13), um den Tropfer (2) zu setzen, ein Mittel (14) umfasst, das eine erste Zangenbacke (10) ausstattet und derart ausgebildet ist, um diesen Tropfer (2) vor seinem Setzen in den durchlochten Schlauch (1) zu halten, wobei ein solches Haltemittel (14) zumindest eine Klemmfeder (15), ja insbesondere zwei Klemmfedern (15) umfasst, die eine Zange bilden, und zwischen welchen der besagte Tropfer (2) festgespannt wird, vorzugsweise einziehbarer, ja sogar abnehmbarer Art, die vorzugsweise seitlich an den Tropfer (2) anliegt.

5. Handbetätigbare Zange (3) nach irgendeinem der vorgehenden Ansprüche, **dadurch gekennzeichnet, dass** das Mittel (13), um den Tropfer (2) zu setzen, ein Mittel (17) umfasst, das im Bereich einer ersten Zangenbacke (10) gebildet ist, vorgesehen, um einen solchen Tropfer (2) aufzunehmen, und zumindest teilweise durch eine Öffnung (18), insbesondere in Form von einer Aussparung gebildet ist, die im Bereich des freien Endes der ersten Zangenbacke (10) gebildet ist, und in deren Innern sich ein Teil des Tropfers (2) positioniert.

6. Handbetätigbare Zange (3) nach irgendeinem der vorgehenden Ansprüche, **dadurch gekennzeichnet, dass** die Zange (3) ein Mittel (20) umfasst, das die zweite Zangenbacke (10') ausstattet und vorgesehen ist, um einen Bewässerungsschlauch (1) in einer ersten Position zum Durchlochen dieses Schlauchs (1) sowie in einer zweiten Position zum Setzen eines Tropfers (2) in diesen durchlochten Schlauch (1) aufzunehmen.

7. Handbetätigbare Zange (3) nach Anspruch 6, **dadurch gekennzeichnet, dass** das Aufnahmemittel (20), einerseits, durch eine Halterung (21) für die Aufnahme des Schlauchs (1), und, andererseits, bewegbar hinsichtlich der ersten Zangenbacke (10), und zwar zwischen einer ersten Position zum Durchlochen dieses Schlauchs (1) und einer zweiten Position zum Setzen des Tropfers (2) in den durchlochten Schlauch (1), gebildet ist.

8. Handbetätigbare Zange (3) nach Anspruch 7, **dadurch gekennzeichnet, dass** die Zange (3) ein Mittel zum Zurückstellen (24) des Aufnahmemittels (20) von der ersten Position zum Durchlochen des Schlauchs (1) in die zweite Position zum Setzen eines Tropfers (2) in diesen Schlauch (1) umfasst.

9. Handbetätigbare Zange (3) nach einem der Ansprüche 6 bis 8, **dadurch gekennzeichnet, dass** die Zange (3) ein Mittel (26), um die Form und/oder die Abmessung des Mittels für die Aufnahme (20) eines Schlauchs (1) an jene dieses Schlauchs (1) anzupassen, umfasst.

10. Handbetätigbare Zange (3) nach einem der Ansprüche 7 oder 8, **dadurch gekennzeichnet, dass** die Halterung (21) durch eine Rinne gebildet ist und vorzugsweise eine U-förmige Gestalt annimmt.
